# EUROPÄISCHE PATENTANMELDUNG

(11) **EP 4 175 155 A1**
(43) Veröffentlichungstag der Anmeldung: **03.05.2023**
(21) Anmeldenummer: 21205490.2
(22) Anmeldetag: 29.10.2021
(51) Int. Cl.: H02M 7/5387, H02M 7/5395, H02M 1/00, H02P 27/08, G05B 13/02, G06N 3/08

(54) **VERFAHREN ZUM KONFIGURIEREN UND STEUERN EINES ELEKTRISCHEN KONVERTERS SOWIE KONVERTERSTEUERUNG UND KONVERTER**

(71) Anmelder: Siemens Aktiengesellschaft, 80333 München (DE)
(72) Erfinder: Hein, Daniel, 81549 München (DE); Limmer, Steffen, 80687 München (DE); Mondal, Gopal, 91058 Erlangen (DE); Nielebock, Sebastian, 91301 Forchheim (DE); Sterzing, Volkmar, 85579 Neubiberg (DE)
(74) Vertreter: Siemens Patent Attorneys

(57) **Zusammenfassung**

Zum Konfigurieren des Konverters (CON), der einen einstellbaren Referenzgenerator (RGEN) zum Generieren eines Referenzsignals (RF) für ein Ausgabesignal (VABC) des Konverters, einen Pulsweitenmodulator (PWM) zum Erzeugen eines durch das Referenzsignal (RF) pulsweitenmodulierten Rechtecksignals (RS) sowie einen Umsetzer (TP) zum Umsetzen des Rechtecksignals (RS) in das Ausgabesignal (VABC) aufweist, wird eine Vielzahl Betriebsdatensätzen (BD) des Konverters eingelesen. Die Betriebsdatensätze (BD) werden jeweils in ein erstes Maschinenlernmodul (ML1) eingespeist. Erfindungsgemäß wird für einen jeweils resultierenden Ausgabedatensatz (SD1) des ersten Maschinenlernmoduls eine aus einer Einstellung des Referenzgenerators (RGEN) anhand dieses Ausgabedatensatzes (SD1) resultierende Performanz des Konverters ermittelt. Das erste Maschinelernmodul (ML1) wird dann mittels eines numerischen Optimierungsverfahrens darauf trainiert, die ermittelte Performanz zu optimieren.

Zum Steuern des Konverters (CON) werden fortlaufend aktuelle Betriebsdatensätze (BD) des Konverters erfasst und in das trainierte erste Maschinenlernmodul (ML1) eingespeist. Durch die vom ersten Maschinenlernmodul (ML1) ausgegebenen ersten Einstelldatensätze (SD1) wird der Referenzgenerator (RGEN) fortlaufend eingestellt.

## Beschreibung

Elektrische Konverter, wie beispielsweise Spannungsumsetzer, Frequenzumsetzer, Umrichter, Inverter, Wechselrichter oder andere elektrische Energiewandler, erzeugen ihre Ausgabespannung häufig mittels eines pulsweitenmodulierten Rechtecksignals. Die Pulsweitenmodulation erlaubt es hierbei, eine effektive Ausgabespannung oder Ausgabeleistung des Konverters zu regeln. Durch das Rechtecksignal wird eine Eingangsspannung des Konverters in kurzen Zeitintervallen idealerweise entweder ganz durchgeschaltet oder ganz blockiert. Ohmsche Energieverluste treten dabei im Wesentlichen nur während sehr kurzer Zeitintervalle auf, die für einen Wechsel zwischen den beiden Schaltzuständen benötigt werden. Aus diesem Grund wird üblicherweise angestrebt, in möglichst kurzer Zeit zwischen den Schaltzuständen umzuschalten. Eine schnelle Umschaltung begünstigt jedoch in der Regel eine Erzeugung von elektromagnetischen Störungen.

Das pulsweitenmodulierte Rechtecksignal kann durch ein Tiefpassfilter gefiltert werden, um die steilen Schaltflanken zu glätten und ein mehr oder weniger glattes Ausgabesignal zu erzeugen. Alternativ dazu kann das Rechtecksignal auch direkt ausgegeben werden, um beispielsweise einen Elektromotor zu versorgen, dessen Wicklung die Schaltflanken von selbst glättet.

Die Steuerung eines Konverters im Allgemeinen und der Pulsweitenmodulation im Besonderen wird häufig durch einen Satz von Einstellparametern festgelegt. Insofern ein Konverter ganz unterschiedlichen Betriebsbedingungen, z.B. hinsichtlich Ausgabeleistung, Betriebstemperatur, Netzimpedanz, Dämpfung, Offsetströmen oder Spannungseinbrüchen unterworfen sein kann, werden solche Einstellparameter oft sehr konservativ festgelegt. Derartige Festlegungen sind jedoch in vielen Fällen nicht für alle Betriebsbedingungen optimal.

Es ist Aufgabe der vorliegenden Erfindung, ein Verfahren zum Konfigurieren und ein Verfahren zum Steuern eines elektrischen Konverters sowie eine Konvertersteuerung und einen elektrischen Konverter anzugeben, die insbesondere bei wechselnden Betriebsbedingungen eine bessere Performanz aufweisen.

Gelöst wird diese Aufgabe durch ein Verfahren mit den Merkmalen des Patentanspruchs 1, durch ein Verfahren mit den Merkmalen des Patentanspruchs 4, durch eine Konvertersteuerung mit den Merkmalen des Patentanspruchs 12, durch einen elektrischen Konverter mit den Merkmalen des Patentanspruchs 13, durch ein Computerprogrammprodukt mit den Merkmalen des Patenanspruchs 14 sowie durch ein computerlesbares Speichermedium mit den Merkmalen des Patentanspruchs 15.

Zum Steuern eines elektrischen Konverters wird ein Referenzsignal für ein Ausgabesignal des Konverters durch einen einstellbaren Referenzgenerator generiert. Durch einen Pulsweitenmodulator wird ein durch das Referenzsignal pulsweitenmoduliertes Rechtecksignal erzeugt, das in das Ausgabesignal umgesetzt wird. Weiterhin werden fortlaufend Betriebsbedingungen des Konverters spezifizierende Betriebsdatensätze erfasst und in ein erstes Maschinenlernmodul eingespeist. Erfindungsgemäß ist das erste Maschinenlernmodul darauf trainiert, anhand eines jeweiligen Betriebsdatensatzes einen jeweiligen ersten Einstelldatensatz zum Einstellen des Referenzgenerators auszugeben, durch dessen Anwendung eine Performanz des Konverters optimiert wird. Entsprechend wird der Referenzgenerator durch vom ersten Maschinenlernmodul ausgegebene erste Einstelldatensätze fortlaufend eingestellt.

Zum Konfigurieren eines elektrischen Konverters, der einen einstellbaren Referenzgenerator zum Generieren eines Referenzsignals für ein Ausgabesignal des Konverters, einen Pulsweitenmodulator zum Erzeugen eines durch das Referenzsignal pulsweitenmodulierten Rechtecksignals sowie einen Umsetzer zum Umsetzen des Rechtecksignals in das Ausgabesignal aufweist, wird eine Vielzahl von Betriebsbedingungen des Konverters spezifizierenden Betriebsdatensätzen eingelesen. Die Betriebsdatensätze werden jeweils in ein erstes Maschinenlernmodul als Eingabedatensatz eingespeist. Erfindungsgemäß wird für einen jeweils resultierenden Ausgabedatensatz des ersten Maschinenlernmoduls eine aus einer Einstellung des Referenzgenerators anhand dieses Ausgabedatensatzes resultierende Performanz des Konverters in Form eines oder mehrerer Performanzwerte ermittelt. Das erste Maschinenlernmodul wird dann mittels eines numerischen Optimierungsverfahrens darauf trainiert, die ermittelten Performanzwerte zu optimieren. Durch das trainierte erste Maschinenlernmodul wird der Konverter konfiguriert.

Zum Ausführen eines erfindungsgemäßen Verfahrens sind eine Konvertersteuerung, ein elektrischer Konverter, ein Computerprogrammprodukt sowie ein computerlesbares, vorzugsweise nichtflüchtiges Speichermedium vorgesehen.

Die erfindungsgemäßen Verfahren sowie die erfindungsgemäße Konvertersteuerung und der erfindungsgemäße elektrische Konverter können beispielsweise mittels eines oder mehrerer Prozessoren, Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass durch dynamische Einstellung eines Referenzgenerators das Referenzsignal fortlaufend an aktuelle Betriebsbedingungen des Konverters angepasst werden kann. Insofern das Referenzsignal in der Regel einen erheblichen Einfluss auf eine Performanz des Konverters hat, kann die Performanz in vielen Fällen, insbesondere unter wechselnden Betriebsbedingungen gegenüber einem Betrieb mit einem fest vorgegebenen Referenzsignal erheblich verbessert werden. Darüber hinaus können durch die Verwendung eines datengetriebenen Maschinenlernmoduls auch komplexe Wirkungszusammenhänge zwischen Einstellparametern des Referenzgenerators und der Performanz des Konverters gut abgebildet werden.

Vorteilhafte Ausführungsformen und Weiterbildungen der Erfindung sind in den abhängigen Ansprüchen angegeben.

Gemäß einer vorteilhaften Ausführungsform der Erfindung kann zum Steuern des Konverters das erste Maschinenlernmodul darauf trainiert sein, anhand eines jeweiligen Betriebsdatensatzes einen jeweiligen eine Trägerfrequenz und/oder eine Modulationstiefe spezifizierenden, zweiten Einstelldatensatz zum Einstellen des Pulsweitenmodulators auszugeben, durch dessen Anwendung eine Performanz des Konverters optimiert wird. Entsprechend kann der Pulsweitenmodulator durch vom ersten Maschinenlernmodul ausgegebene zweite Einstelldatensätze fortlaufend eingestellt werden. Durch eine derartige Hinzunahme weiterer Optierungsparameter kann die Performanz in vielen Fällen weiter verbessert werden.

Gemäß einer vorteilhaften Weiterbildung der Erfindung kann zum Steuern des Konverters die Performanz durch mehrere, anhand eines Gewichtswertesatzes gewichtete Performanzmaße für unterschiedliche zu optimierende Zielgrößen des Konverters spezifiziert werden. Das erste Maschinenlernmodul kann entsprechend darauf trainiert sein, anhand eines jeweiligen Betriebsdatensatzes sowie eines jeweiligen Gewichtswertesatzes einen jeweiligen ersten Einstelldatensatz zum Einstellen des Referenzgenerators auszugeben, durch dessen Anwendung die durch den jeweiligen Gewichtswertesatz gewichtete Performanz des Konverters optimiert wird. Ein zweites Maschinenlernmodul kann dann darauf trainiert sein, anhand von Betriebsdatensätzen des Konverters eines der Performanzmaße zu selektieren und/oder einen Gewichtswertesatz auszugeben, das oder der bei Einspeisung in das trainierte erste Maschinenlernmodul eine Performanz des Konverters optimiert. Dementsprechend können Betriebsdaten des Konverters in das zweite Maschinenlernmodul und Ausgabedaten des zweiten Maschinenlernmoduls in das erste Maschinenlernmodul eingespeist werden. Der Referenzgenerator kann dann durch vom ersten Maschinenlernmodul ausgegebene erste Einstelldatensätze fortlaufend eingestellt werden. Durch das Zusammenwirken des ersten und des zweiten Maschinenlernmoduls können je nach aktuell vorliegender Betriebssituation unterschiedliche Performanzziele dynamisch priorisiert werden. So können der Optimierung in kritischen Betriebsszuständen automatisch andere oder anders gewichtete Performanzmaße zugrunde gelegt werden als im Regelbetrieb.

Gemäß einer weiteren vorteilhaften Ausführungsform der Erfindung kann zum Konfigurieren des Konverters ein jeweiliger Performanzwert ermittelt werden, indem ein simulierter Referenzgenerator eines Simulationsmodells des Konverters, der Referenzgenerator des Konverters und/oder ein Referenzgenerator eines dazu ähnlichen Konverters anhand des jeweiligen Ausgabedatensatzes eingestellt wird und abhängig davon eine im Betrieb unter den durch den jeweiligen Betriebsdatensatz spezifizierten Betriebsbedingungen resultierende Performanz ermittelt wird.

Gemäß einer vorteilhaften Weiterbildung der Erfindung können zum Konfigurieren des Konverters bei der Ermittlung der Performanz mehrere Performanzmaße für unterschiedliche zu optimierende Zielgrößen des Konverters ermittelt werden. Weiterhin kann eine Vielzahl verschiedener Gewichtungen für die Performanzmaße jeweils in Form eines Gewichtswertesatzes generiert werden. Zum Training des ersten Maschinenlernmoduls können dann die generierten Gewichtswertesätze zusammen mit den Betriebsdatensätzen in das erste Maschinenlernmodul als Eingabedatensätze eingespeist werden.

Insbesondere kann mittels des trainierten ersten Maschinenlernmoduls ein zweites Maschinenlernmodul darauf trainiert werden, anhand von Betriebsdatensätzen des Konverters eines der Performanzmaße zu selektieren und/oder einen Gewichtswertesatz auszugeben, das oder der bei Einspeisung in das trainierte erste Maschinenlernmodul eine Performanz des Konverters optimiert.

Weiterhin kann das zur Konfiguration des Konverters verwendete numerische Optimierungsverfahren insbesondere ein genetisches Optimierungsverfahren, eine Partikelschwarmoptimierung, ein symbolisches Regressionsverfahren und/oder ein Rückpropagationsverfahren umfassen. Für derartige numerische Optimierungsverfahren stehen eine Vielzahl von effizienten numerischen Implementierungen zu Verfügung.

Gemäß weiterer vorteilhafter Ausführungsformen der Erfindung kann eine Performanz einen Wirkungsgrad des Konverters, eine Abweichung des Ausgabesignals vom Referenzsignal, einen Oberwellenanteil des Ausgabesignals, eine Stabilität des Ausgabesignals, einen Gleichtaktanteil des Ausgabesignals und/oder vom Konverter ausgehende elektromagnetische Störungen betreffen. Die Erfindung erlaubt es, auf einfache Weise ganz unterschiedliche Betriebsgrößen des Konverters in die Performanzoptimierung einzubeziehen.

Darüber hinaus können abhängig von der Einstellung des Referenzgenerators das Referenzsignal aus mehreren bereitgestellten Referenzsignalen selektiert werden, ein Verlauf oder eine Form des Referenzsignals modifiziert werden, ein Generierungsprozess für das Referenzsignal modifiziert werden und/oder Operatoren zur Signalverknüpfung und/oder Signalumsetzung selektiert werden, anhand derer das Referenzsignal aus bereitgestellten Signalen gebildet wird.

Ferner kann ein jeweiliges Maschinenlernmodul ein künstliches neuronales Netz, ein bayessches neuronales Netz, ein rekurrentes neuronales Netz, ein faltendes neuronales Netz, ein mehrlagiges Perzeptron, einen Autoencoder, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfassen.

Ein Ausführungsbeispiel der Erfindung wird nachfolgend anhand der Zeichnung näher erläutert. Dabei veranschaulichen jeweils in schematischer Darstellung:
- Figur 1: einen elektrischen Konverter mit einer erfindungsgemäßen Konvertersteuerung,
- Figur 2: eine Pulsweitenmodulation eines Rechtecksignals durch ein Referenzsignal,
- Figur 3: verschiedene als Referenz für ein Ausgabesignal des Konverters dienende Referenzsignale, und
- Figur 4: eine erfindungsgemäße Konvertersteuerung beim Training eines ersten Maschinenlernmoduls, und
- Figur 5: eine erfindungsgemäße Konvertersteuerung beim Training eines zweiten Maschinenlernmoduls.

Insofern in den Figuren gleiche oder korrespondierende Bezugszeichen verwendet werden, bezeichnen diese Bezugszeichen gleiche oder korrespondierende Entitäten, die insbesondere wie im Zusammenhang mit der betreffenden Figur beschrieben, implementiert oder ausgestaltet sein können.

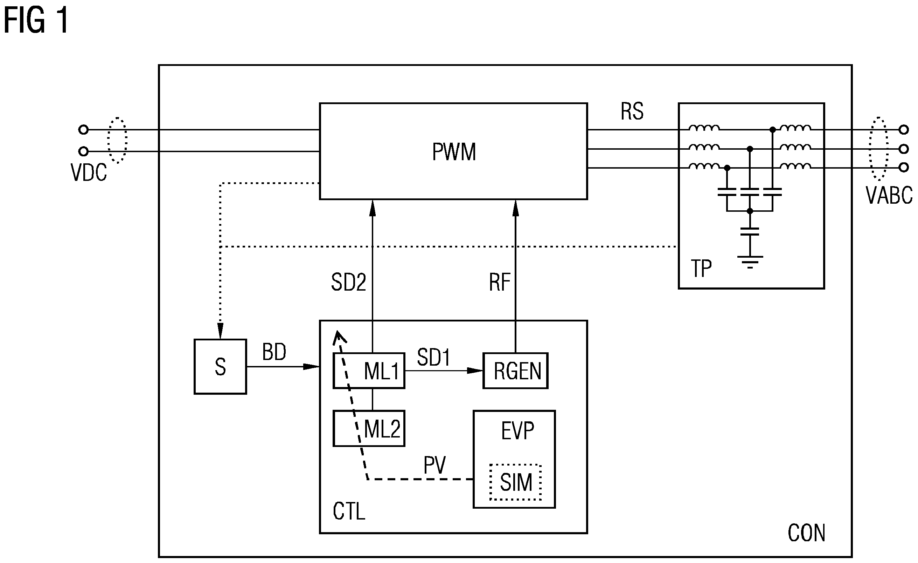

Figur 1 veranschaulicht in schematischer Darstellung einen elektrischen Konverter CON mit einer erfindungsgemäßen Konvertersteuerung CTL zum Steuern des Konverters CON. Der elektrische Konverter CON kann ein Spannungsumsetzer, ein Frequenzumsetzer, ein Umrichter, ein Inverter, ein Wechselrichter oder ein anderer elektrischer Energiewandler sein.

Im vorliegenden Ausführungsbeispiel ist der Konverter CON als Wechselrichter implementiert, der eine Eingangsgleichspannung VDC in eine Dreiphasenwechselspannung umsetzt. Die Dreiphasenwechselspannung wird durch den Konverter CON in Form dreier Ausgabesignale VABC ausgegeben. Eine solche Dreiphasenwechselspannung wird häufig kurz als Drehstrom bezeichnet. Die Ausgabesignale VABC können zur Versorgung von elektrischen Geräten oder zur Einspeisung in Stromnetze vorgesehen sein.

Der Konverter CON verfügt über eine Sensorik S, die fortlaufend Betriebsparameter des Konverters CON misst oder anderweitig erfasst. Die gemessenen oder erfassten Betriebsparameter werden von der Sensorik S zur Konvertersteuerung CTL in Form von Betriebsdatensätzen BD übermittelt. Durch die Betriebsdatensätze BD werden Betriebszustände oder Betriebsbedingungen des Konverters CON spezifiziert. Insbesondere können die Betriebsdatensätze BD einen Eingangsstrom, eine Eingangsspannung, eine Ausgangsspannung, einen Ausgangsstrom, eine Ausgabeleistung, eine Betriebstemperatur, eine Netzimpedanz, eine Dämpfung, einen Offset-Strom, einen Spannungseinbruch, eine Strom- oder Spannungsschwankung oder andere für den Betrieb des Konverters CON relevante oder den Betrieb beeinflussende Betriebs- oder Umgebungsparameter spezifizieren.

Für den Betrieb des Konverters CON relevante Betriebsdatensätze BD können außer von der Sensorik S auch von anderen Quellen stammen. Beispielsweise kann eine Information über einen zu erwartenden Leistungsbedarf online über das Internet empfangen werden.

Weiterhin verfügt der Konverter CON über einen Pulsweitenmodulator PWM, dem die Eingangsgleichspannung VDC zugeführt wird. Gemäß den bekannten Prinzipien einer Pulsweitenmodulation schaltet der Pulsweitenmodulator PWM die Eingangsgleichspannung VDC idealerweise entweder ganz durch oder blockiert sie vollständig, wodurch ein Rechtecksignal erzeugt wird. Insofern im vorliegenden Ausführungsbeispiel eine Dreiphasenwechselspannung ausgegeben werden soll, erzeugt der Pulsweitenmodulator PWM auf diese Weise drei zueinander phasenverschobene Rechtecksignale RS. Die Rechtecksignale RS sind jeweils durch ein periodisches Referenzsignal RF pulsweitmoduliert.

Die Referenzsignale RF können als Referenz für die Ausgabesignale VABC des Konverters CON aufgefasst werden, insofern die Pulsweitenmodulation derart erfolgt, dass ein jeweiliges Rechtecksignal nach Glättung durch ein Tiefpassfilter im Wesentlichen einem Verlauf des zugehörigen Referenzsignals RF folgt. Zur Erzeugung der Dreiphasenwechselspannung VABC sind die modulierenden Referenzsignale RF entsprechend zueinander um 120 Grad phasenverschoben.

Die pulsweitenmodulierten Rechtecksignale RS werden vom Pulsweitenmodulator PWM in ein Tiefpassfilter TP des Konverters CON eingespeist, der die Rechtecksignale RS glättet und die geglätteten Signale als dreiphasige Ausgabesignale VABC ausgibt.

Die Referenzsignale RF werden von einem Referenzgenerator RGEN der Konvertersteuerung CTL erzeugt und von dieser zum Pulsweitenmodulator PWM übermittelt. Im Folgenden wird aus Übersichtlichkeitsgründen nur eines dieser Referenzsignale RF beispielhaft betrachtet.

Zur Durchführung einer Pulsweitenmodulation anhand eines Referenzsignals stehen mehrere wohlbekannte Modulationsverfahren zur Verfügung, z.B. die sogenannte Raumzeigermodulation, im englischen häufig auch als "Space Vector Modulation" bezeichnet.

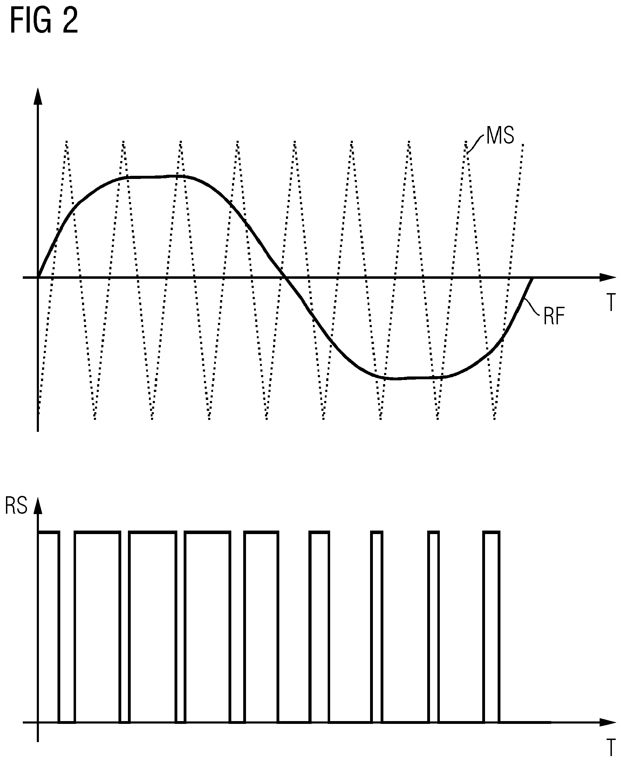

Ein einfaches Verfahren zur Pulsweitenmodulation eines Rechtecksignals durch ein Referenzsignal wird in Figur 2 veranschaulicht. Figur 2 stellt im oberen Teil ein gegen die Zeit T aufgetragenes Referenzsignal RF sowie ein entsprechend aufgetragenes Modulationssignal MS schematisch dar. Das Modulationssignal MS ist ein Dreiecksignal und weist eine erheblich höhere Frequenz als das Referenzsignal RF auf. Im unteren Teil von Figur 2 ist das pulsweitmodulierte Rechtecksignal RS ebenso gegen die Zeit T aufgetragen.

Zur Pulsweitenmodulation des Rechtecksignals RS wird das Referenzsignal RF fortlaufend mit dem Modulationssignal MS durch einen elektrischen Komparator verglichen. Wenn eine Spannung des Referenzsignals RF größer als eine Spannung des Modulationssignals MS ist, wird das Rechtecksignal RS durchgeschaltet, andernfalls gesperrt. Auf diese Weise entsteht der im unteren Teil von Figur 2 veranschaulichte, pulsweitmodulierte Kurvenverlauf des Rechtecksignals RS.

Wie durch Figur 1 weiter veranschaulicht, wird das pulsweitmodulierte Rechtecksignal RS dem Tiefpassfilter TP zugeführt und von diesem geglättet. Das geglättete Ausgangssignal VABC folgt dann im Wesentlichen dem Verlauf des modulierenden Referenzsignals RF. Alternativ dazu kann das Rechtecksignal RS auch direkt als Ausgabesignal des Konverters CON ausgegeben werden, um damit z.B. einen Elektromotor zu versorgen, dessen Wicklungsspulen die Versorgungsspannung von selbst glätten.

Der Referenzgenerator RGEN kann eine Vielzahl unterschiedlicher Referenzsignale RF generieren. Die Art und Weise der Generierung der Referenzsignale RF ist dabei durch Einstellparameter in weiten Grenzen einstellbar. Zum Einstellen des Referenzgenerators RGEN werden die Einstellparameter in Form eines ersten Einstelldatensatzes SD1 zum Referenzgenerator RGEN übermittelt.

Abhängig vom übermittelten ersten Einstelldatensatz SD1 kann das Referenzsignal RF aus mehreren bereitgestellten Referenzsignalen selektiert werden, kann ein Verlauf oder eine Form des Referenzsignals modifiziert werden, kann ein Generierungsprozess für das Referenzsignal modifiziert werden und/oder können Operatoren zur Signalverknüpfung oder Signalumsetzung selektiert werden, anhand derer das Referenzsignal RF aus bereitgestellten Signalen gebildet wird.

Bei der letztgenannten Einstellvariante kann beispielsweise ein mathematischer Ausdruck mit mathematischen Operatoren wie "+", "-", "*", "/" etc., mit mathematischen Funktionen wie Sinus, Kosinus, Min, Max, Abs etc., mit Vergleichsoperatoren wie ">", "<", "=" etc. und/oder mit Boolschen Operatoren wie "and", "or", "not", "if", "else" etc. spezifiziert werden.

Auf diese Weise können z.B. ein Sinussignal IN1 und ein konstantes Signal IN2 zu einem Referenzsignal RF verknüpft werden gemäß RF = IN1 - (IN1 - IN2) * heaviside(IN1 - IN2) oder gemäß RF = heaviside(IN1 - IN2). Die heaviside-Funktion hat für positive Argumente bekanntlich den Wert 1 und für negative Argumente den Wert 0.

Mittels derartiger Signalverknüpfungen kann eine von Experten leicht interpretierbare Form der Signalerzeugung eingestellt werden. Die geschlossene Form derartiger Ausdrücke zur Signalerzeugung ermöglicht erheblich höhere Zyklusfrequenzen der Konvertersteuerung CTL. Dies begünstigt wiederum einen Einsatz derartiger Konvertersteuerungen in Siliziumkarbidbasierten Konvertern. Letztere erlauben erheblich höhere Schaltfrequenzen und benötigen deshalb in der Regel weniger aufwendige Tiefpassfilter und/oder weisen einen höheren Wirkungsgrad auf.

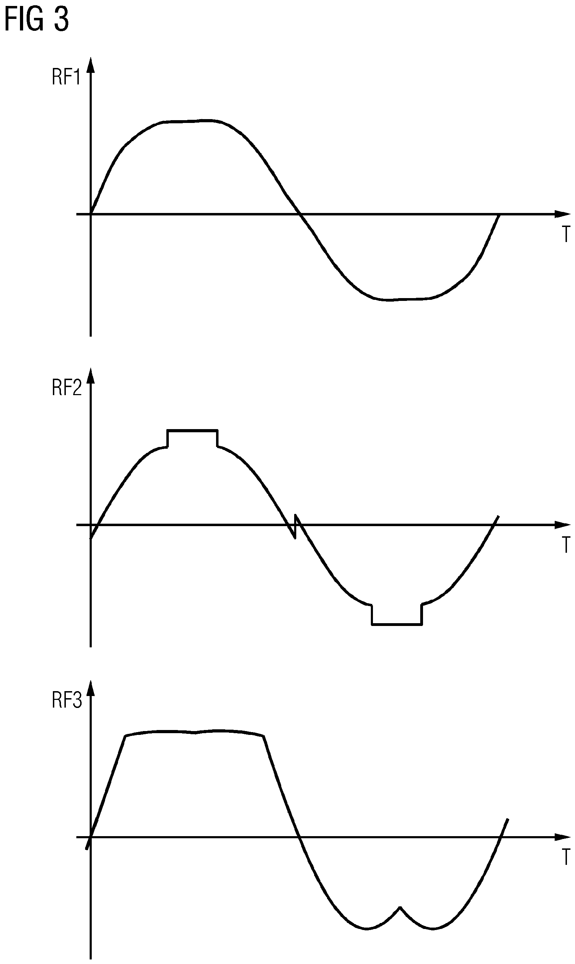

Figur 3 veranschaulicht verschiedene Typen von Referenzsignalen RF, die abhängig vom ersten Einstelldatensatz SD1 durch den Referenzgenerator RGEN erzeugt werden können. Im oberen und unteren Teil von Figur 3 ist jeweils ein stetiges Referenzsignal RF1 bzw. RF3 gegen die Zeit T aufgetragen, während der mittlere Teil von Figur 3 ein unstetiges Referenzsignal RF2 zeigt.

Häufig führt eine Pulsweitenmodulation durch ein stetiges Referenzsignal einerseits zu einem sehr geringen und damit vorteilhaften Gleichtaktanteil im Ausgangssignal, andererseits aber zu verhältnismäßig hohen Schaltverlusten. Demgegenüber können unstetige Referenzsignale, wie das im mittleren Teil von Figur 3 dargestellte, sogenannte Flat-topped-Referenzsignal RF2 zu verhältnismäßig geringen Schaltverlusten, aber verhältnismäßig starken Gleichtaktsignalen führen. Demgegenüber ist das Referenzsignal RF3 ein im Sinne der Erfindung optimiertes Referenzsignal, das es erlaubt, eine gute Gleichtaktunterdrückung mit geringen Schaltverlusten zu verbinden.

Zur Generierung eines solchen performanzoptimierenden Referenzsignals wird im Rahmen der vorliegenden Erfindung angestrebt, zu jeweils aktuell vorliegenden Betriebsbedingungen einen ersten Einstelldatensatz SD1 zu generieren, durch den der Referenzgenerator RGEN derart eingestellt wird, dass eine Performanz des Konverters CON optimiert wird. Die Betriebsbedingungen werden dabei durch die Betriebsdatensätze BD quantifiziert. Unter einer Optimierung sei in dieser Anmeldung auch ein Annähern an ein Optimum verstanden.

Neben dem ersten performanzoptimierenden Einstelldatensatz SD1 wird im vorliegenden Ausführungsbeispiel auch noch ein zweiter Einstelldatensatz SD2 ermittelt, durch den der Pulsweitenmodulator PWM abhängig von den aktuellen Betriebsbedingungen in performanzoptimierender Weise eingestellt wird. Vorzugsweise wird durch den zweiten Einstelldatensatz SD2 eine Trägerfrequenz und/oder eine Modulationstiefe der durch den Pulsweitenmodulator PWM durchgeführten Pulsweitenmodulation eingestellt.

Die zu optimierende Performanz kann unterschiedliche Zielgrößen des Konverters oder des Konverterbetriebs betreffen, z.B. einen Wirkungsgrad des Konverters, eine Abweichung des Ausgabesignals VABC vom Referenzsignal RF, einen Oberwellenanteil des Ausgabesignals VABC, eine Stabilität des Ausgabesignals VABC, einen Gleichtaktanteil des Ausgabesignals VABC, vom Konverter CON ausgehende elektromagnetische Störungen, eine Maximalleistung des Konverters CON, eine Temperatur von Komponenten des Konverters CON, einen Verschleiß, eine Lebensdauer und/oder andere zu optimierende Zielgrößen des Konverters CON.

Zur Bewertung der Performanz des Konverters CON verfügt die Konvertersteuerung CTL - wie Figur 1 weiter veranschaulicht - über einen Performanzbewerter EVP, der eine aktuelle Performanz des Konverters CON anhand der erfassten Betriebsdatensätze BD ermittelt. Im vorliegenden Ausführungsbeispiel sind mehrere Performanzmaße vorgesehen, durch die unterschiedliche Zielgrößen des Konverters CON oder des Konverterbetriebs bewertet werden.

Insbesondere können durch den Performanzbewerter EVP die oben angegebenen Zielgrößen bewertet werden. In diesem Fall bewertet der Performanzbewerter EVP anhand der Betriebsdatensätze BD einen Wirkungsgrad des Konverters CON, eine Abweichung des Ausgabesignals VABC vom Referenzsignal RF, einen Oberwellenanteil des Ausgabesignals VABC, eine Stabilität des Ausgabesignals VABC, einen Gleichtaktanteil des Ausgabesignals VABC und/oder vom Konverter CON ausgehende elektromagnetische Störungen. Durch eine unten näher erläuterte Gewichtung der verschiedenen Performanzmaße wird dann durch den Performanzbewerter EVP fortlaufend ein gewichteter Performanzwert PV ermittelt, durch den eine aktuelle Gesamtperformanz des Konverters CON quantifiziert wird. Eine Berechnungsroutine zur Berechnung eines solchen Performanzwerts PV wird im Umfeld des maschinellen Lernens häufig auch als Kostenfunktion bezeichnet.

Alternativ oder zusätzlich können Performanzwerte auch simulativ ermittelt werden. Zu diesem Zweck kann der Performanzbewerter EVP einen Simulator SIM aufweisen. Mittels des Simulators SIM kann der Konverter CON sowie dessen Betriebsverhalten unter unterschiedlichen Betriebsbedingungen modelliert und simuliert werden. Insbesondere können für einen jeweiligen ersten Einstelldatensatz SD1 und zweiten Einstelldatensatz SD2 ein Verhalten des Referenzgenerators RGEN, ein Verhalten des Pulsweitenmodulators PWM und/oder ein Verhalten des Tiefpassfilters TP simuliert werden, um auf diese Weise einen Performanzwert PV zu ermitteln.

Zur Erzeugung vorteilhafter erster Einstelldatensätze SD1 und zweiter Einstelldatensätze SD2 werden zwei miteinander gekoppelte Maschinenlernmodule ML1 und ML2 der Konvertersteuerung CTL mittels eines oder mehrerer Verfahren des maschinellen Lernens, insbesondere des bestärkenden Lernens darauf trainiert, anhand von zugeführten Betriebsdatensätzen BD erste und zweite Einstelldatensätze auszugeben, die die Performanz des Konverters CON in obigem Sinne optimieren.

Unter einem Training sei hierbei allgemeine eine Optimierung einer Abbildung von Eingabedaten auf Ausgabedaten eines Maschinenlernmoduls, hier ML1 und ML2, verstanden. Diese Abbildung wird nach vorgegebenen Kriterien während einer Trainingsphase optimiert. Als Kriterien können z.B. bei Prädiktionsmodellen ein Prädiktionsfehler, bei Klassifikationsmodellen ein Klassifikationsfehler oder bei Modellen des bestärkenden Lernens eine Performanz eines durch die Ausgabedaten gesteuerten technisches Systems herangezogen werden. Durch das Training können insbesondere Vernetzungsstrukturen von Neuronen eines neuronalen Netzes, Gewichte von Verbindungen zwischen den Neuronen und/oder andere Parameter der Abbildung so eingestellt bzw. optimiert werden, dass die vorgegebenen Kriterien möglichst gut erfüllt werden. Das Training kann somit als Optimierungsproblem aufgefasst werden. Für derartige Optimierungsprobleme des maschinellen Lernens steht eine Vielzahl von effizienten Optimierungsverfahren zur Verfügung. Insbesondere können Gradientenabstiegsverfahren, Rückpropagationsverfahren, Partikelschwarmoptimierungen und/oder genetische Optimierungsverfahren verwendet werden.

Im vorliegenden Ausführungsbeispiel werden zum Training der Maschinenlernmodule ML1 und ML2 - wie in Figur 1 durch einen strichlierten Pfeil angedeutet - die vom Performanzbewerter EVP ermittelten Performanzwerte PV zu den Maschinenlernmodulen ML1 und ML2 zurückgeführt, um deren Lernparameter so einzustellen, dass die Performanzwerte PV letztlich optimiert werden. Im vorliegenden Fall werden die Lernparameter so eingestellt, dass durch die kombinierten Maschinenlernmodule ML1 und ML2 erste Einstelldatensätze SD1 und zweite Einstelldatensätze SD2 ausgegeben werden, durch die der Referenzgenerator RGEN sowie der Pulsweitenmodulator PWM in performanzoptimierender Weise eingestellt werden. Ein spezifischer Ablauf des Trainings wird unten näher erläutert.

Nach dem Training werden den trainierten Maschinenlernmodulen ML1 und ML2 im Regelbetrieb des Konverters CON von der Sensorik S aktuell erfasste Betriebsdatensätze BD zugeführt. Die Sensorik S misst dabei insbesondere Betriebszustände oder Betriebsbedingungen des Pulsweitenmodulators PWM sowie des Tiefpassfilters TP, da diese in der Regel einen wesentlichen Einfluss auf die Performanz des Konverters CON haben. Die gemessenen oder anderweitig erfassten Betriebszustände oder Betriebsbedingungen werden durch die Betriebsdatensätze BD quantifiziert.

Aus einem aktuell erfassten Betriebsdatensatz BD werden durch die Maschinenlernmodule ML1 und ML2 ein erster Einstelldatensatz SD1 sowie ein zweiter Einstelldatensatz SD2 abgeleitet. Der erste Einstelldatensatz SD1 wird vom Maschinenlernmodul ML1 zum Referenzgenerator RGEN übermittelt, um diesen einzustellen. Entsprechend wird der zweite Einstelldatensatz SD2 vom Maschinenlernmodul ML1 zum Pulsweitenmodulator PWM übermittelt, um insbesondere dessen Trägerfrequenz und/oder Modulationstiefe einzustellen. Aufgrund des erfindungsgemäßen Trainings der Maschinenlernmodule ML1 und ML2 werden der Referenzgenerator RGEN sowie der Pulsweitenmodulator PWM durch die Einstelldatensätze SD1 und SD2 so eingestellt, dass die über die verschiedenen Performanzmaße gewichtete Performanz des Konverters CON optimiert wird.

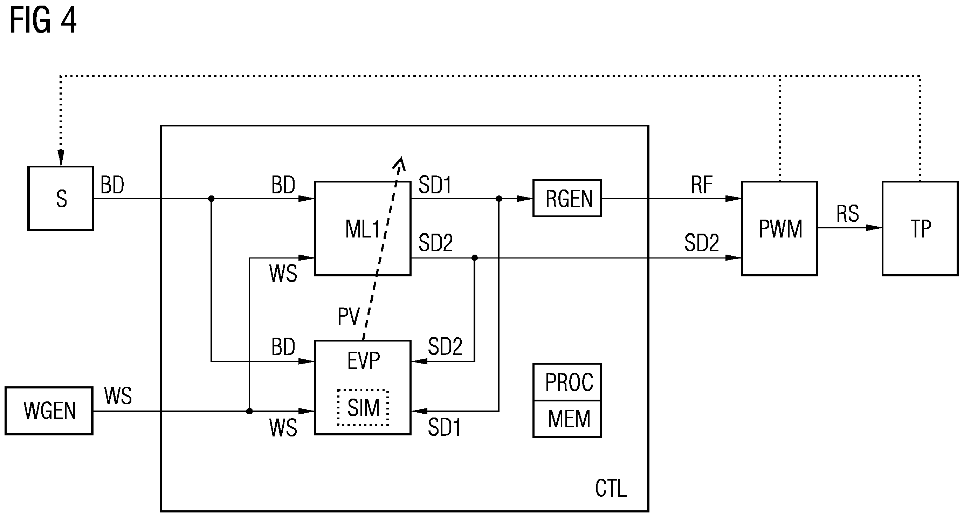

Figur 4 veranschaulicht eine erfindungsgemäße Konvertersteuerung CTL beim Training des Maschinenlernmoduls ML1 in schematischer Darstellung. Die Konvertersteuerung CTL verfügt über einen oder mehrere Prozessoren PROC zum Durchführen der Verfahrensschritte der Erfindung sowie über einen oder mehrere Speicher MEM zum Speichern von zu verarbeitenden Daten.

Zum Training des Maschinenlernmoduls ML1 werden der Konvertersteuerung CTL eine Vielzahl von Betriebsdatensätzen BD von der Sensorik S, von einer Datenbank (nicht dargestellt) mit Betriebsdaten des Konverters CON und/oder von einer Simulation des Konverters CON zugeführt. Die Betriebsdatensätze BD werden in das Maschinenlernmodul ML1 sowie in den Performanzbewerter EVP als Eingabedaten eingespeist. Anhand von gespeicherten oder simulativ ermittelten Betriebsdatensätzen BD kann das Training des Maschinenlernmoduls ML1 insbesondere offline, d.h. außerhalb eines Regelbetriebs des Konverters CON durchgeführt werden.

Weiterhin wird durch einen Gewichtegenerator WGEN eine Vielzahl von unterschiedlichen Gewichtungen der verschiedenen Performanzmaße generiert und in Form von Gewichtswertesätzen WS in das Maschinenlernmodul ML1 sowie in den Performanzbewerter EVP als Eingabedaten eingespeist.

Aus den zugeführten Betriebsdatensätzen BD ermittelt der Performanzbewerter EVP die verschiedenen Performanzmaße. Weiterhin werden durch den Performanzbewerter EVP die ermittelten Performanzmaße mit den durch einen jeweiligen Gewichtswertesatz WS spezifizierten Gewichten gewichtet, um so einen jeweiligen gewichteten Performanzwert PV abzuleiten.

Anhand der gewichtungsspezifischen Performanzwerte PV wird das Maschinenlernmodul ML1 vorzugsweise mittels eines Verfahrens des bestärkenden Lernens darauf trainiert, ein jeweiliges Paar aus einem Betriebsdatensatz BD und einem Gewichtswertesatz WS in Einstelldatensätze SD1 und SD2 umzusetzen, durch deren Anwendung ein gemäß diesem Gewichtswertesatz WS gewichteter Performanzwert PV zumindest im Mittel optimiert wird.

Zu diesem Zweck wird im vorliegenden Ausführungsbeispiel ein jeweiliger erster Ausgabedatensatz SD1 des Maschinenlernmoduls ML1 in den Referenzgenerator RGEN sowie in den Performanzbewerter EVP eingespeist. Der Referenzgenerator RGEN wird durch den ersten Ausgabedatensatz SD1 wie oben beschrieben eingestellt. Weiterhin wird ein jeweiliger zweiter Ausgabedatensatz SD2 des Maschinenlernmoduls ML1 in den Pulsweitenmodulator PWM sowie in den Performanzbewerter EVP eingespeist. Der Pulsweitenmodulator PWM wird entsprechend durch den zweiten Ausgabedatensatz SD2 wie oben beschrieben eingestellt.

Während des Betriebs des so eingestellten Konverters CON werden durch die Sensorik S fortlaufend resultierende Betriebszustände und Betriebsbedingungen des Konverters CON gemessen und in Form von Betriebsdatensätzen BD zum Performanzbewerter EVP übermittelt. Anhand dieser Betriebsdatensätze BD ermittelt der Performanzbewerter EVP, wie oben ausgeführt, jeweils einen gemäß eines jeweiligen Gewichtsdatensatzes WS gewichteten Performanzwert PV. Alternativ oder zusätzlich können resultierende Betriebszustände oder Betriebsbedingungen auch simulativ ermittelt werden. Insbesondere kann der Performanzbewerter EVP mittels eines Simulators SIM die Performanzmaße bzw. einen jeweiligen Performanzwert PV anhand aktueller und/oder früherer Einstelldatensätze SD1 und SD2 ermitteln.

Der jeweils ermittelte Performanzwert PV wird, wie in Figur 4 durch einen strichlierten Pfeil angedeutet, zum Maschinenlernmodul ML1 zurückgeführt. Anhand der zurückgeführten Performanzwerte PV werden Lernparameter des Maschinenlernmoduls ML1 derart eingestellt, dass die Performanzwerte PV zumindest im Mittel maximiert werden. Zur Durchführung einer solchen Optimierung ist eine Vielzahl von effizienten nummerischen Verfahren verfügbar. Als besonders vorteilhaft erweisen sich genetische Optimierungsverfahren, tiefe symbolische Regressionsverfahren oder Partikelschwarmoptimierungen. Insbesondere können sogenannte Whitebox-Lernverfahren verwendet werden, die sich zur Optimierung von mathematischen Ausdrücken, Schaltungen oder Signalverknüpfungen eignen.

Durch das vorstehend beschriebene Training wird das Maschinenlernmodul ML1 in die Lage versetzt, für viele verschiedene Gewichtungen von Performanzmaßen jeweils optimierte Einstelldatensätze SD1 und SD2 zu einem jeweiligen Betriebsdatensatz BD auszugeben. Ein solches Training erfordert zwar häufig erheblich mehr Trainingsdaten als ein Training für ein einheitliches Performanzmaß, doch kann das einmal trainierte Maschinenlernmodul ML1 in der Regel immer noch sehr schnell ausgeführt werden. Darüber hinaus können die anzuwendenden Performanzmaße im laufenden Betrieb mit wechselnden Gewichten versehen oder auf einfache Weise gewechselt werden.

Im vorliegenden Ausführungsbeispiel wird die Möglichkeit die Performanzmaße unterschiedlich zu gewichten, dazu benutzt, eine weitere vorteilhafte Optimierung auszuführen. Zu diesem Zweck soll das Maschinenlernmodul ML2 darauf trainiert werden, anhand von Betriebsdatensätzen des Konverters CON einen Gewichtswertesatz auszugeben, der bei Einspeisung in das trainierte Maschinenlernmodul ML1 eine Performanz des Konverters CON optimiert.

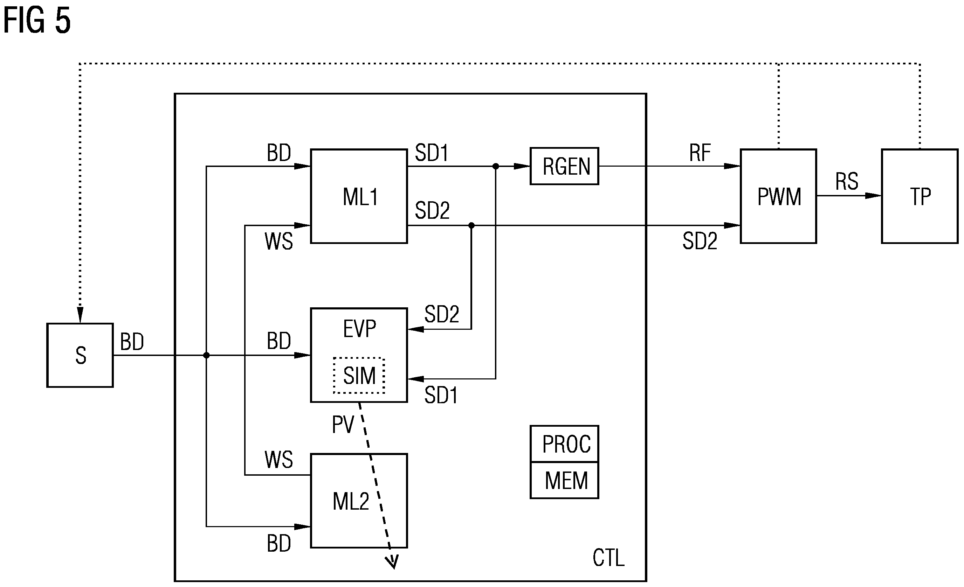

Figur 5 zeigt die erfindungsgemäße Konvertersteuerung CTL beim Training des zweiten Maschinenlernmoduls ML2 in schematischer Darstellung.

Zum Training des Maschinenlernmoduls ML2 werden der Konvertersteuerung CTL eine Vielzahl von Betriebsdatensätzen BD von der Sensorik S, von einer Datenbank (nicht dargestellt) mit Betriebsdaten des Konverters CON und/oder von einer Simulation des Konverters CON zugeführt. Die Betriebsdatensätze BD werden in das trainierte Maschinenlernmodul ML1, in das zu trainierende Maschinenlernmodul ML2 sowie in den PerformanzBewerter EVP jeweils als Eingabedaten eingespeist.

Wie oben bereits erwähnt, soll das Maschinenlernmodul ML2 darauf trainiert werden, zu einem jeweiligen Betriebsdatensatz BD einen performanzoptimierenden Gewichtswertesatz WS auszugeben. Zu diesem Zweck werden die aus einem jeweiligen Betriebsdatensatz BD abgeleiteten Ausgabedaten des Maschinenlernmoduls ML2 als Gewichtswertesatz WS zusammen mit dem jeweiligen Betriebsdatensatz BD in das trainierte Maschinenlernmodul ML1 eingespeist. Die vom trainierten Maschinenlernmodul ML1 aus dem jeweiligen Betriebsdatensatz BD und dem jeweiligen Gewichtswertesatz WS abgeleiteten Einstelldatensätze SD1 und SD2 werden daraufhin zur Einstellung des Referenzgenerators RGEN sowie des Pulsweitenmodulators PWM wie oben beschrieben verwendet. Darüber hinaus werden die Einstelldatensätze SD1 und SD2 auch in den Performanzbewerter EVP eingespeist.

Während des Betriebs des so eingestellten Konverters CON werden durch die Sensorik S fortlaufend resultierende Betriebszustände und Betriebsbedingungen des Konverters CON gemessen und in Form von Betriebsdatensätzen BD zum Performanzbewerter EVP übermittelt. Anhand dieser Betriebsdatensätze BD ermittelt der Performanzbewerter EVP jeweils einen Performanzwert PV. Dieser Performanzwert PV kann durch eine fest vorgegebene Gewichtung der obigen Performanzmaße ermittelt werden oder durch Bewertung eines zusätzlich vorgegebenen Performanzmaßes. Wie oben schon erwähnt, können resultierende Betriebszustände und Betriebsbedingungen auch simulativ mittels des Simulators SIM ermittelt werden.

Der jeweils ermittelte Performanzwert PV wird - wie in Figur 5 durch einen strichlierten Pfeil angedeutet - zum Maschinenlernmodul ML2 zurückgeführt. Anhand der zurückgeführten Performanzwerte PV werden Lernparameter des Maschinenlernmoduls ML2 derart eingestellt, dass die Performanzwerte PV zumindest im Mittel maximiert werden. Zur Durchführung einer solchen Optimierung ist eine Vielzahl von effizienten numerischen Verfahren verfügbar. Als besonders vorteilhaft erweisen sich in diesem Fall gradientenbasierte Optimierungsverfahren, Rückpropagationsverfahren, genetische Optimierungsverfahren, tiefe symbolische Regressionsverfahren oder Partikelschwarmoptimierungen. Insbesondere können neben Whitebox-Lernverfahren auch sogenannte Blackbox-Lernverfahren verwendet werden. Letztere können beispielsweise mittels künstlicher neuronaler Netze implementiert werden.

Durch das vorstehend beschriebene Training wird das Maschinenlernmodul ML2 darauf trainiert, zu einem jeweiligen Betriebsdatensatz BD einen jeweiligen Gewichtswertesatz WS auszugeben, der die Performanzmaße in einer für den aktuellen Betriebszustand optimierten Weise gewichtet. Dabei erweist es sich als vorteilhaft, das Training des Maschinenlernmoduls ML2 über einen längeren Zeithorizont auszuführen als ein Training des Maschinenlernmoduls ML1.

Alternativ oder zusätzlich kann das Maschinenlernmodul ML2 auch darauf trainiert werden, zu einem jeweiligen Betriebsdatensatz BD ein für den aktuellen Betriebszustand vorteilhaftes Performanzmaß auszuwählen. Das trainierte Maschinenlernmodul ML1 kann dann dazu veranlasst werden, auf das ausgewählte Performanzmaß oder auf eine hierfür optimierte Steuerungsvariante umzuschalten.

Durch das Zusammenwirken der Maschinenlernmodule ML1 und ML2 können je nach aktuell vorliegender Betriebssituation unterschiedliche Performanzziele dynamisch priorisiert werden. So können der Optimierung in kritischen Betriebszuständen automatisch andere oder anders gewichtete Performanzmaße zugrunde gelegt werden als im Regelbetrieb.

Insofern elektrische Konverter üblicherweise mit festen Performanzzielen im Hinblick auf den ungünstigsten Fall dimensioniert werden, kann durch eine dynamische Anpassung der Performanzziele häufig auf weniger aufwendige Hardware zurückgegriffen werden. Auf diese Weise können mittels der Erfindung in vielen Fällen eine Effizienz von Konvertern gesteigert und gleichzeitig ein Hardwareaufwand verringert werden.

## Patentansprüche

1. Computerimplementiertes Verfahren zum Steuern eines elektrischen Konverters (CON), wobei
a) ein Referenzsignal (RF) für ein Ausgabesignal (VABC) des Konverters (CON) durch einen einstellbaren Referenzgenerator (RGEN) generiert wird,
b) ein durch das Referenzsignal (RF) pulsweitenmoduliertes Rechtecksignal (RS) durch einen Pulsweitenmodulator (PWM) erzeugt wird, und
c) das Rechtecksignal (RS) in das Ausgabesignal (VABC) umgesetzt wird,
**dadurch gekennzeichnet, dass**
d) Betriebsbedingungen des Konverters spezifizierende Betriebsdatensätze (BD) fortlaufend erfasst werden,
e) die Betriebsdatensätze (BD) fortlaufend in ein erstes Maschinenlernmodul (ML1) eingespeist werden, das darauf trainiert ist, anhand eines jeweiligen Betriebsdatensatzes (BD) einen jeweiligen ersten Einstelldatensatz (SD1) zum Einstellen des Referenzgenerators (RGEN) auszugeben, durch dessen Anwendung eine Performanz des Konverters (CON) optimiert wird, und
f) der Referenzgenerator (RGEN) durch vom ersten Maschinenlernmodul (ML1) ausgegebene erste Einstelldatensätze (SD1) fortlaufend eingestellt wird.

2. Verfahren nach Anspruch 1, **dadurch gekennzeichnet,**
**dass** das erste Maschinenlernmodul (ML1) darauf trainiert ist, anhand eines jeweiligen Betriebsdatensatzes (BD) einen jeweiligen eine Trägerfrequenz und/oder eine Modulationstiefe spezifizierenden, zweiten Einstelldatensatz (SD2) zum Einstellen des Pulsweitenmodulators (PWM) auszugeben, durch dessen Anwendung eine Performanz des Konverters (CON) optimiert wird, und
**dass** der Pulsweitenmodulator (PWM) durch vom ersten Maschinenlernmodul (ML1) ausgegebene zweite Einstelldatensätze (SD2) fortlaufend eingestellt wird.

3. Verfahren nach einem der vorhergehenden Ansprüche, **dadurch gekennzeichnet,**
**dass** die Performanz durch mehrere, anhand eines Gewichtswertesatzes (WS) gewichtete Performanzmaße für unterschiedliche zu optimierende Zielgrößen des Konverters (CON) spezifiziert wird,
**dass** das erste Maschinenlernmodul (ML1) darauf trainiert ist, anhand eines jeweiligen Betriebsdatensatzes (BD) sowie eines jeweiligen Gewichtswertesatzes (WS) einen jeweiligen ersten Einstelldatensatz (SD1) zum Einstellen des Referenzgenerators (RGEN) auszugeben, durch dessen Anwendung die durch den jeweiligen Gewichtswertesatz (WS) gewichtete Performanz des Konverters (CON) optimiert wird,
**dass** ein zweites Maschinenlernmodul (ML2) darauf trainiert ist, anhand von Betriebsdatensätzen (BD) des Konverters (CON) eines der Performanzmaße zu selektieren und/oder einen Gewichtswertesatz (WS) auszugeben, das oder der bei Einspeisung in das trainierte erste Maschinenlernmodul (ML1) eine Performanz des Konverters (CON) optimiert,
**dass** Betriebsdaten (BD) des Konverters (CON) in das zweite Maschinenlernmodul (ML2) eingespeist werden,
**dass** Ausgabedaten (WS) des zweiten Maschinenlernmoduls (ML2) in das erste Maschinenlernmodul (ML1) eingespeist werden, und
**dass** der Referenzgenerator (RGEN) durch vom ersten Maschinenlernmodul (ML1) ausgegebene erste Einstelldatensätze (SD1) fortlaufend eingestellt wird.

4. Computerimplementiertes Verfahren zum Konfigurieren eines elektrischen Konverters (CON), der einen einstellbaren Referenzgenerator (RGEN) zum Generieren eines Referenzsignals (RF) für ein Ausgabesignal (VABC) des Konverters (CON), einen Pulsweitenmodulator (PWM) zum Erzeugen eines durch das Referenzsignal (RF) pulsweitenmodulierten Rechtecksignals (RS) sowie einen Umsetzer (TP) zum Umsetzen des Rechtecksignals (RS) in das Ausgabesignal (VABC) aufweist, wobei
a) eine Vielzahl von Betriebsbedingungen des Konverters (CON) spezifizierenden Betriebsdatensätzen (BD) eingelesen werden,
b) die Betriebsdatensätze (BD) jeweils in ein erstes Maschinenlernmodul (ML1) als Eingabedatensatz eingespeist werden,
c) für einen jeweils resultierenden Ausgabedatensatz (SD1) des ersten Maschinenlernmoduls (ML1) eine aus einer Einstellung des Referenzgenerators (RGEN) anhand dieses Ausgabedatensatzes (SD1) resultierende Performanz des Konverters (CON) in Form eines oder mehrerer Performanzwerte (PV) ermittelt wird,
d) das erste Maschinenlernmodul (ML1) mittels eines numerischen Optimierungsverfahrens darauf trainiert wird, die ermittelten Performanzwerte (PV) zu optimieren, und
e) der Konverter (CON) durch das trainierte erste Maschinenlernmodul (ML1) konfiguriert wird.

5. Verfahren nach Anspruch 4, **dadurch gekennzeichnet, dass** ein jeweiliger Performanzwert (PV) ermittelt wird, indem
- ein simulierter Referenzgenerator eines Simulationsmodells (SIM) des Konverters (CON), der Referenzgenerator (RGEN) des Konverters (CON) und/oder ein Referenzgenerator eines dazu ähnlichen Konverters anhand des jeweiligen Ausgabedatensatzes (SD1) eingestellt wird, und
- abhängig davon eine im Betrieb unter den durch den jeweiligen Betriebsdatensatz (BD) spezifizierten Betriebsbedingungen resultierende Performanz ermittelt wird.

6. Verfahren nach Anspruch 4 oder 5, **dadurch gekennzeichnet,**
**dass** bei der Ermittlung der Performanz mehrere Performanzmaße für unterschiedliche zu optimierende Zielgrößen des Konverters (CON) ermittelt werden,
**dass** eine Vielzahl verschiedener Gewichtungen für die Performanzmaße jeweils in Form eines Gewichtswertesatzes (WS) generiert wird, und
**dass** zum Training des ersten Maschinenlernmoduls (ML1) die generierten Gewichtswertesätze (WS) zusammen mit den Betriebsdatensätzen (BD) in das erste Maschinenlernmodul (ML1) als Eingabedatensätze eingespeist werden.

7. Verfahren nach Anspruch 6, **dadurch gekennzeichnet, dass** mittels des trainierten ersten Maschinenlernmoduls (ML1) ein zweites Maschinenlernmodul (ML2) darauf trainiert wird, anhand von Betriebsdatensätzen (BD) des Konverters (CON) eines der Performanzmaße zu selektieren und/oder einen Gewichtswertesatz (WS) auszugeben, das oder der bei Einspeisung in das trainierte erste Maschinenlernmodul (ML1) eine Performanz des Konverters (CON) optimiert.

8. Verfahren nach einem der Ansprüche 4 bis 7, **dadurch gekennzeichnet,**
**dass** das numerische Optimierungsverfahren ein genetisches Optimierungsverfahren, eine Partikelschwarmoptimierung, ein symbolisches Regressionsverfahren und/oder ein Rückpropagationsverfahren umfasst.

9. Verfahren nach einem der vorhergehenden Ansprüche, **dadurch gekennzeichnet,**
**dass** eine Performanz
- einen Wirkungsgrad des Konverters (CON),
- eine Abweichung des Ausgabesignals (VABC) vom Referenzsignal (RF),
- einen Oberwellenanteil des Ausgabesignals (VABC),
- eine Stabilität des Ausgabesignals (VABC)
- einen Gleichtaktanteil des Ausgabesignals (VABC) und/oder
- vom Konverter (CON) ausgehende elektromagnetische Störungen betrifft.

10. Verfahren nach einem der vorhergehenden Ansprüche,
**dadurch gekennzeichnet,**
**dass** abhängig von der Einstellung des Referenzgenerators (RGEN)
- das Referenzsignal (RF) aus mehreren bereitgestellten Referenzsignalen selektiert wird,
- ein Verlauf oder eine Form des Referenzsignals (RF) modifiziert wird,
- ein Generierungsprozess für das Referenzsignal (RF) modifiziert wird, und/oder
- Operatoren zur Signalverknüpfung und/oder Signalumsetzung selektiert werden, anhand derer das Referenzsignal (RF) aus bereitgestellten Signalen gebildet wird.

11. Verfahren nach einem der vorhergehenden Ansprüche,
**dadurch gekennzeichnet,**
**dass** ein jeweiliges Maschinenlernmodul (ML1, ML2) ein künstliches neuronales Netz, ein bayessches neuronales Netz, ein rekurrentes neuronales Netz, ein faltendes neuronales Netz, ein mehrlagiges Perzeptron, einen Autoencoder, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfasst.

12. Konvertersteuerung (CTL) zum Steuern eines elektrischen Konverters (CON), eingerichtet zum Ausführen eines Verfahrens nach einem der vorhergehenden Ansprüche.

13. Elektrischer Konverter (CON) mit einer Konvertersteuerung (CTL) nach Anspruch 12.

14. Computerprogrammprodukt eingerichtet zum Ausführen eines Verfahrens nach einem der Ansprüche 1 bis 11.

15. Computerlesbares Speichermedium mit einem Computerprogrammprodukt nach Anspruch 14.
